# EUROPEAN PATENT SPECIFICATION

(11) **EP 2 904 350 B1**
(45) Date of publication and mention of the grant of the patent: **19.12.2018**
(21) Application number: 12794519.4
(22) Date of filing: 08.10.2012
(51) Int. Cl.: G01C 17/38, G01C 21/00

(54) **TEST EQUIPMENT FOR CHECKING SENSORS SENSITIVE TO MAGNETIC FIELDS**
TESTVORRICHTUNG ZUR PRÜFUNG VON MAGNETFELDEMPFINDLICHEN SENSOREN
EQUIPEMENT DE TEST POUR LA VÉRIFICATION DE CAPTEURS SENSIBLES AUX CHAMPS MAGNÉTIQUES

(43) Date of publication of application: 12.08.2015
(73) Proprietor: Microtest S.r.l., 56010 Vicopisano (IT)
(72) Inventor: AMELIO, Guiseppe, I-55100 Lucca fraz. San Pietro a Vico (LU) (IT); CANTINI, Francesco, I-56031 Bientina (PI) (IT)
(74) Representative: Emmi, Mario
(86) International application number: PCT/IT2012/000310
(87) International publication number: WO 2014/057506

(56) References cited:
- JP-A- H1 144 538
- US-A- 4 472 682
- US-A1- 2002 023 362

## Description

### Background art

Electronic sensors that are sensitive to magnetic fields have long been present in the market, capable of perceiving the magnetic field and reproducing an electronic reply on the basis of the magnetic field perceived. Recently, this type of sensors, for various applications, have been realized also with MEMS technology (Microelectronic Machines) that have allowed both miniaturization and cost reduction. One of these applications, just as a way of example, foresees the integration of these sensors inside new generation mobile phones (such as the iPhone) in such a way as to integrate electronically inside them a compass function. The electronic sensor, which results sensitive to the Earth's magnetic field, perceives it and reproduces in reply a consequent signal that is used by a specific software to reproduce the compass function.

Independently from that which can be the specific application of this type of sensor, it is anyway absolutely necessary that it is correctly tested with specific equipment with the aim of verifying, and eventually correcting, its "perception" of the magnetic field.

To that aim, there is equipment in the market that foresees a base plane on which the sensors to test are placed. A plurality of coils are also foreseen arranged in pre-determined positions inside which current is made to pass, which generates an induced magnetic field. The magnetic field has to be generated in the three main directions (**X**, **Y**, **Z**) with extreme precision and this takes place through a control of the intensity of circulating current and the controlled exclusion or activation of some coils.

However, this solution presents the big technical inconvenience that the control of the direction and intensity of the magnetic field, generated through the use of the coils that are composed by a mass of spirals inside which the current circulates, does not result easy at all. It is clear that also a simple deformation of the coil can cause an undesired alteration of the magnetic field with respect to the expected real value. In brief, the magnetic fields obtained with this type of equipment, above all the one in the vertical direction Z, are scarcely precise and scarcely controllable, therefore altering the result of the test that is going to be done on said sensors.

Moreover, the coils are structurally cumbersome and render their placement in the test equipment difficult.

The publication US2002/023362 A1 describes an equipment for calibrating one or more electronic compasses. The compasses are fixed on a base plane at the centre of three orthogonal Helmholtz coils and a sequence of precisely-known magnetic field patterns is generated by the coils.

The publication US 4,472,682 describes a shielded test chamber for electronic compasses, wherein the compasses are placed on a rotating shaft in the middle of a magnetic field-generating coil.

### Disclosure of the invention

It is therefore the aim of the present invention to
provide a type of test equipment that solves at least in part said technical inconveniences.

In particular, it is the aim of the present invention to provide a new type of test equipment that results simple and precise in the generation of the magnetic field.

These and other aims are therefore reached with the present equipment 100 as per claim 1.

The equipment includes:
- A base plane (30) comprising one or more fixing positions (9) on which to arrange said one or more sensors (200) to test;
- Means (40) to inject electric current in the base plane (30);
- Means (10, 15) for the generation of a magnetic field through the circulation of the electric current injected.

In accordance with the invention the means (10, 15) for the generation of the magnetic field comprise:
- Two or more first tracks (10, 15), parallel between them, and on which the electric current injected can circulate and that develop on the base plane (30) along a first direction (X, Y);
- Two or more second tracks (10, 15), parallel between them, on which the electric current injected can circulate and that develop on the base plane (30) along a second direction (X, Y), orthogonal to the first direction (X, Y).

The fixing positions (9) are also placed each one in such a point that a reference plane (500), orthogonal to the base plane (3), passing through said fixing position and parallel to the first tracks and to the second tracks, results a symmetric plane or substantially symmetric plane for the base plane (30).

In fact, the tracks placed on one side of such a symmetric plane 500 are symmetrical or almost symmetrical to the tracks that are on the opposite side. The substantially symmetry depends on the point in which the fixing position is placed, which could be not perfectly centered with respect to the base plane 30, above all precisely if many independent fixing points 9 are foreseen.

An electronic processor (20) is therefore foreseen, programmed to control the injection of current in such a way that this takes place in a single direction and/or in two opposite directions.

The symmetry of the tracks with respect to the fixing positions allows at this point, following the injection of current, to obtain precise magnetic fields in a direction (for example X or Y) as consequent vectorial summation of components, some of which are mutually annulled (thanks precisely to such a symmetry), therefore obtaining the desired direction. Depending on whether the current travels in a direction with respect to the fixing point or in two opposite directions, the resultant magnetic field is either in direction Z or in direction X and Y.

This particularly simple system therefore reaches all the pre-set aims.

Above all, the use of the tracks allows a structurally simpler and less cumbersome solution with respect to traditional solutions that foresee the use of coils.

Moreover, the control of a magnetic field induced is significantly more precise through the passage of current in the tracks rather than inside the coils. Last but not least, this solution, in a simple manner, allows precisely also a precise control of the magnetic field in the direction **Z**, something that is currently not obtainable with traditional solutions.

Advantageously, the injection of current is in a single direction in the first tracks and in the second tracks, in such a way that said symmetry of the tracks with respect to the fixing positions (9) generates on the fixing positions a magnetic field (**B1**) substantially parallel to the base plane (30) and substantially orthogonal to the direction of development of the tracks in which the current circulates, and in a direction on the first and second tracks that are on one side of a symmetric plane (500) corresponding to one or more positions (9) to test and in the opposite direction on the tracks that are on the side opposite to said symmetric plane and parallel to the preceding tracks in which said current circulates so that the resultant of the magnetic field (**Bz**) is orthogonal to the base plane (30).

It is clear that the succession of injections of current can be any, that is first only on the first tracks in a single direction, then only on the second tracks in a single direction, and then, for example, on the first tracks in direction on one side of a symmetric plane 500 and on the opposite side in the tracks on the other side of the symmetric plane. Alternatively, it can be injected, for example, in two opposite directions and then only on the second tracks in a direction and then only on the first tracks in a single direction.

Advantageously, the tracks can be realized in copper. The advantage is that of a solution that guarantees a good circulation of current with a low production cost.

Advantageously, the first tracks and the second tracks are on two different faces (3', 3") of the plane (3).

Advantageously, around a hundred of first tracks and around a hundred of second tracks can be foreseen.

Obviously, the higher the number of tracks the lower the effect of imperfection introduced by a not perfect symmetry will be. In theory, there is no limit to the number of tracks that can be implemented.

Further advantages can be deduced from the other claims.

### Brief description of drawings

Further characteristics and advantages of the present invention will result clearer with the description that follows of one of its embodiments, made to illustrate but not to limit, with reference to the annexed drawings, wherein:
- Figure 1 shows in an axonometric view a schematization of the test apparatus in accordance with the invention;
- Figures 2 and 3 show the two faces of the base plane 3 on which the sensors to test are placed and on which the tracks for the passage of current for the generation of the magnetic fields develop;
- Figure 4 shows a detail of track 10 on which the current passes;
- Figure 5 shows an axonometric view;
- Figure 6 shows in a front view the formation of the magnetic field concentric to the track for the passage of the current;
- Figure 7 shows the generation of the magnetic fields through the injection of current in the parallel tracks that develop along the direction Y and the action of the resultant magnetic field (B1) on the sensor; the sensor is arranged with respect to the base plane in such a position with respect to the underlying tracks that the resultant of the magnetic field is in the direction X when the current flows in the tracks along the direction Y;
- Figure 8 shows the generation of the magnetic fields through the injection of current in the parallel tracks that develop along the direction X and the action of the resultant magnetic field (B1) on the sensor; the sensor is arranged with respect to the base plane in such a position that, with respect to the underlying tracks, that the resultant of the magnetic field is in the direction Y when the current flows in the tracks along the direction X;
- Figure 9 shows, as a way of example, some values of magnetic fields obtained with a current of 5A;
- Figure 10 shows the generation of magnetic field (Bz) in the direction Z obtained as a consequence of the passage of current in two opposite directions to the right and to the left of the position of the sensor to test;
- Figure 11 shows some values obtained always with current at 5A;
- Figure 12 shows in a further axonometric view a pattern of magnetic fields for obtaining the component Bz.

### Description of some preferred embodiments

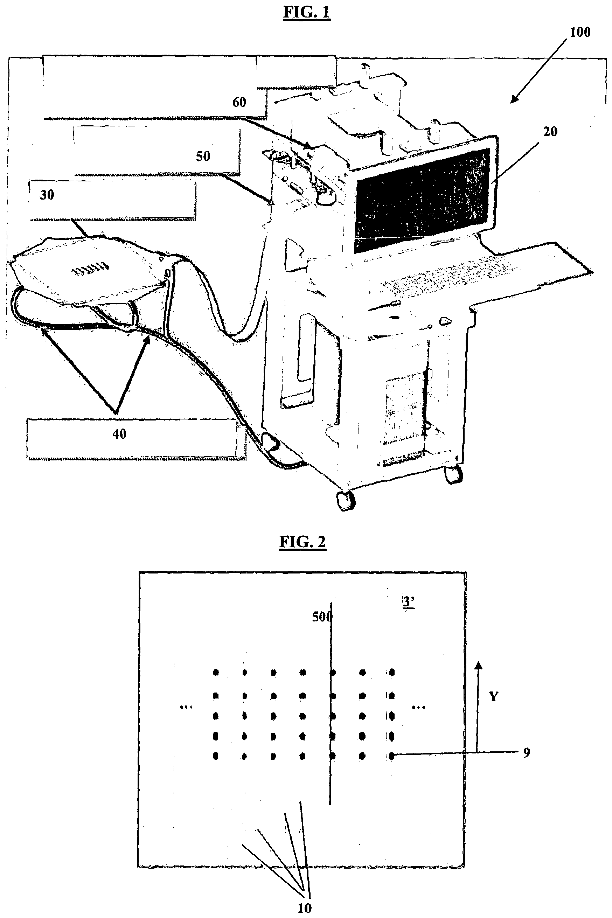

Figure 1 shows in an axonometric view, in the form of a scheme, a test equipment 1 as per the present invention.

In particular, figure 1 shows an electronic processor 20, for example a PC, which is used for the control of the generation of the current and the check of reply of the sensor that is tested. In particular, figure 1 shows the base plane 30 to do the test, the object of the invention, and that will be described in detail right below. The base plane has to be then fed electrically for the generation of the magnetic field, as described below. To that aim, electric wires 40 are foreseen that are connected with the base plane 30 through which the equired current is fed (generally about 5 Amperes).

A motherboard 50 is also foreseen, connected to the base plane, and whose function is that of generating other useful signals at the completion of the test of the magnetic sensor, and a feeder 60.

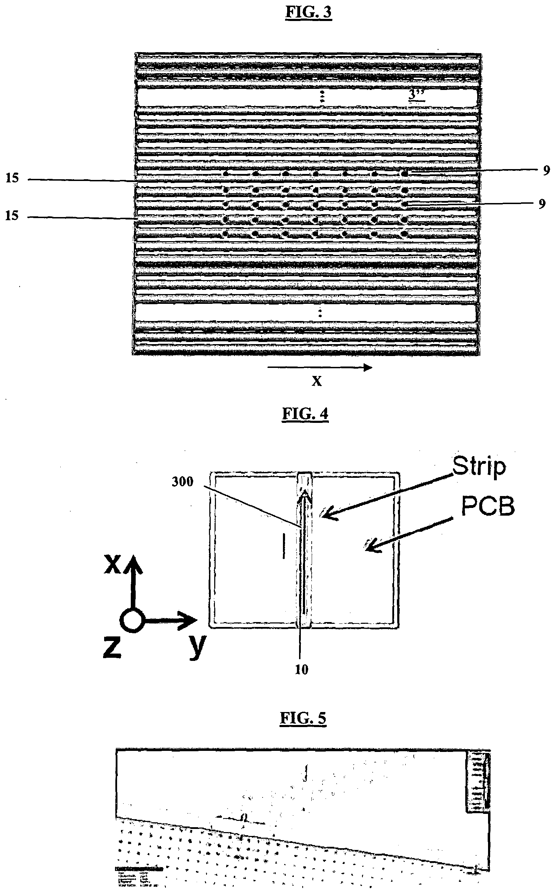

Going into the details of the invention, therefore, figure 2 and figure 3 show the base plane 30 which includes a plurality of strips 10 arranged according to a direction indicated in figure with Y and a plurality of strips 15 that develop in a direction orthogonal to the preceding one, called X. The strips X and Y are therefore orthogonal among them, that is each strip X is orthogonal to all the strips Y present and vice-versa. Moreover, all the strips that develop in the direction Y are parallel among them, as well as all the strips in the direction X, actually forming a plurality of tracks of circulation of the electric current that become crossed among them.

The PC 20 in fact controls the injection of current in the two directions and measures the reaction of the sensors that are going to be tested after the generation of the magnetic field.

The base plane 30 is in fact a circuit printed with acronym ("pcb" -Printed Circuit Board) on which these strips are stamped which have precisely a resistance function for the passage of the current. For example, as shown in figure 5, the base plane 30 can be obtained with the overlapping of many layers on each of which are printed or obtained such tracks of circulation of the current. As shown in figure 2 and figure 3, the layers that contain the tracks "X" and "Y" are only two of the different layers that compose the pcb, and are indicated in figure with numbers 3' and 3". The layers, in general, can anyway be many more (10-16-20 ..) and serve to make also other service tracks pass. These two layers X and Y, like all the other layers, are generally separated by plastic material (typically FR4).

The strips are realized of an idoneous material for the conduction of current, like for example copper, and are arranged in such a way that those in the direction Y of figure 2 lay on the face 3', while those in the direction X of figure 3 lay on the opposite face 3", always of the base plane 30. Obviously, the inverse solution is absolutely equivalent and can be adopted without moving apart from the present inventive concept.

Figure 4 cut out for clarity purposes a portion of printed circuit 30 in such a way as to enlarge a short stretch of track (for example the 10 or the 15) on which current circulates in accordance with the direction of arrow 300 represented.

The same situation of figure 4 is shown for more clarity in an axonometric view in figure 5.

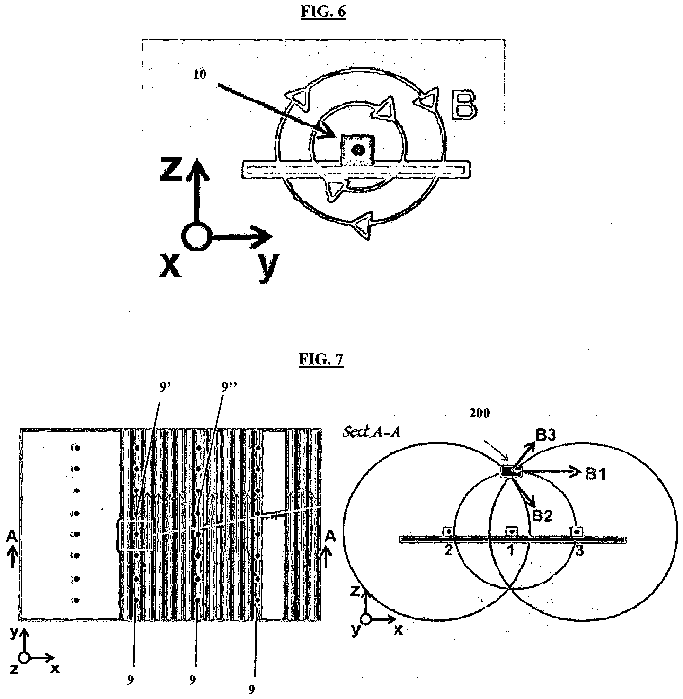

Figure 6 therefore shows clearly how the circulation of current along a track (10 or 15, indistinctly) generates a magnetic field (**B**) formed by many circles concentric among them to the track where the current circulates. When a sensor 200 to test is placed at a certain quota from the base plane, this will be intercepted, depending on the quota, by a circle of the magnetic field.

Going on with the structural description of the invention, figure 2 and figure 3 show a plurality of positions 9 disseminated on one of the two upper surface 3' or lower surface 3" of the base plane and arranged to hold specific supports where the sensors to test are placed (eventually hold reference sensors as well). If, for example, the positions are arranged on the face 3' figure 3 is to be interpreted in the sense that it highlights these positions 9 with respect to the tracks present also on the face 3'' . The contrary can be obtained without moving.apart from the present inventive concept.

In this way, the sensors to test can be placed directly on the base plane 30, in correspondence of the upper surface or lower surface and they remain fixed there during the test.

Such supports and the connection system of them to the base plane are well known in the state of the art and are not the object of the present invention and, for this reason, are not described in further detail here. Just for completion reasons it is here cited a connection through attachment holes, detachable junction systems, etc.

As shown in figure 7, said plurality of positions 9 are highlighted disseminated on the plane and on which to apply the sensors or directly or preferably through the specific devices that hold them. Each position is suitable for holding a sensor and each position 9 is distanced laterally from another position 9 placed side by side along the direction X through a certain number of strips of circulation of the current interposed that develop in the direction Y and placed side by side along the direction X. The columns 9 of the positions are placed between a line of strips 10 of passage of current. Nevertheless, they could also be arranged in a point where there is no passage of a strip.

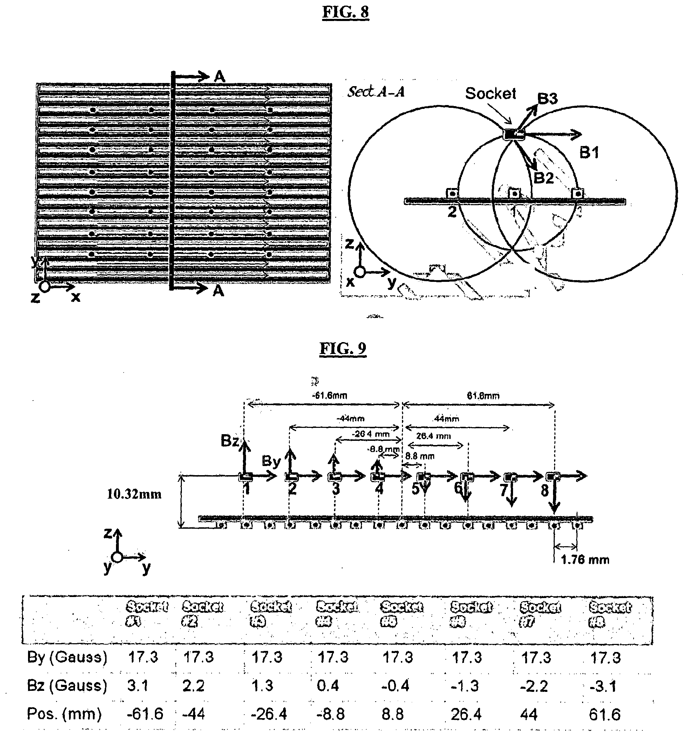

Subsequent figure 8 shows the same positions 9 (plane 3 rotated of 90°) to highlight their positioning with respect to the tracks belonging to the underlying layer and that are orthogonal to the preceding ones and that develop in the direction X (therefore the tracks that are in the underlying layer). Also in this case each position 9 foresees a certain number of tracks to its right and to its left and preferably each position is placed above a strip.

What is' important is therefore precisely the arrangement of said positions, or anyway of support means in general for these sensors. The arrangement of the positions has to be such that there exists a substantially symmetrical of each position 9 with respect to all the tracks that develop in the direction X on the face 3" and in the direction Y on the face 3'.

Basically, there is a multiplicity of parallel tracks in the direction X and a multiplicity of parallel tracks in the direction Y. The area where the fixing positions are placed is arranged in such a way that each position enjoys a substantial symmetry with respect to the tracks contextually in the direction X and in the direction Y.

With reference to figure 2 it is also represented, for example, a symmetric plane 500, orthogonal to the plane 3, and passing through any positioning point 9. Such a symmetric plane 500 is in this example case parallel to the tracks that develop in the direction Y (tracks 10 of figure 2). It is deduced from here that such a plane divides the plane 3 into two symmetric parts precisely with respect to said tracks since the number and the arrangement of the tracks on one side of the plane is equal or substantially equal to the tracks placed on the opposite side (in the case of the figure the plane is parallel to the tracks 10 but the same thing happens if it is realized parallel to the tracks 15). Reference is made to substantial symmetry since perfect symmetry would be obtainable with a single central position while, with more positions, it is obvious that each position cannot see the same number of tracks on one side and on the other side with respect to the theoretical symmetry plane 500. Nevertheless, as better described in detail below, such a symmetry error is unimportant.

The sensors to test will be positioned typically above the board and are never moved. Even if the tracks that develop in direction Y (the tracks 15 of figure 3) are arranged in the second layer 3", the magnetic field will be anyway present above the "board" (the distance between the two layers X and Y is of the tenth of mm and therefore introduces an unimportant error on the alteration of symmetry). As already said, the tracks on the right/left-top/bottom of the sensors are many; this is because if it is wished to test many sensors simultaneously, it will not be possible to have the same number of tracks for all. By increasing the number, typically around a hundred on the left and on the right, the eventual dissymmetry (105 on the right and 95 on the left) becomes poorly relevant. With a single sensor at the center the symmetry would be perfect.

As shown in figure 7 section A-A, the sensor 200, independently from the fixing means, is arranged in such a way that there is a substantial symmetry with respect to all the tracks present on its right and on its left. Basically, if the sensor placed in position 9' is considered, for example, this, like all the others, will see a certain number of tracks on its right which is substantially equal to the number of tracks that sees on its left with almost perfect symmetry (see also section A-A of figure 7). If the sensor were just one and placed perfectly at the center, there would be perfect symmetry.

Section A-A of figure 7 cuts out only for clarity purposes just two tracks on the right and on the left of the placement position of the sensor but it is clear that actually the number of tracks on the right and on the left is much higher. It is therefore clear that, for example, the position 9'' of figure 7 will see a number of tracks, on its right, lower to five with respect to the sensor 9' and not really perfect but that introduces an unimportant error.

The same positions enjoy symmetry, obviously also with respect to the underlying tracks.

With a high number of tracks, as in accordance with the present invention, this "almost symmetry" therefore introduces an unimportant error. The greater the symmetry of these tracks is, the better the uniformity of the magnetic field will be in correspondence of the various positions. If the number of strips is quite high (around a hundred or more) also the non perfect symmetry of the number of strips will not imply substantial differences in the uniformity of the field produced.

It is precisely this symmetry that allows to obtain a vectorial summation of the magnetic fields so that the resultant is almost exclusively that in a specific desired direction.

To that aim, always figure 7 highlights physically what happens in correspondence of the passage of current along said strips, through the enlargement in section A-A. It is clear that to this is added, in an identical manner, the effect of the other tracks present in an identical manner to what has been describe.

The positioning point of the sensor to be applied is represented by the position 9' placed on a strip of passage of current. Referring to the two strips of passage of current of the section A-A, therefore, numbered with numbers 2 and 3, these generate a certain magnetic field, circular and concentric to the strip and that intercepts the sensor. Actually, there are other magnetic fields that are concentric of greater and smaller diameter generated by each track but these, not intercepting the sensor, are not of interest. Being the current the same in direction and intensity in all the strips (5 Amperes), in fact the magnetic field, circular and concentric to the track 2, is equal to that of the track 3. Likewise, the track 1 generates a magnetic field, circular and concentric to the track 1. Being the track 2 and the track 3 positioned symmetrically with respect to the sensor to test 200, the sensor 200 will feel the effects of a magnetic field, the resultant of which is (B1) in the direction X.

Basically, by making in such a way so that a same intensity circulates and there is a same direction of current between a track on the right and a track on the left of the point 9, tracks that are of symmetry for the sensor 200, it is obtained by known vectorial summation a precise resultant of magnetic field in the direction X because in the other direction Y they are annulled reciprocally. Figure 7 section A-A shows the vector magnetic field B2 tangent to the magnetic field generated by the track 2 and the vector B3 tangent to the circular magnetic field generated by the track 3 and therefore the resultant is **B1**. Thanks to the positioning of the sensor exactly on the vertical of the track 1, in that point therefore the resultant of this magnetic field is precisely in the direction of **B1**.

It is therefore clear that, for that to happen, the intensities of current between the tracks 2 and 3 have to be equal to generate the same magnetic field. The magnetic field of the track 1 could also be not present but, when present, it contributes to increase the resultant of B1.

It is also clear that, for functional simplicity, in all the tracks the same current passes even if, in theory, it would be possible to diversify the intensities of current in such a way that they are different for each pair of symmetric tracks with respect to the positioning point of the sensor.

Always with reference to figure 7, many tracks on the right of the point 9' and many tracks on the left (in the order of a hundred) are foreseen and, two by two, perfectly symmetric with respect to the point itself. As already said, being the positions more than one, the symmetry is not perfect, therefore or on the right or on the left there can be far tracks that do not have their correspondence on the opposite side. Their contribution, on the whole, introduces however an error on the resultant magnetic field that is unimportant. Therefore, as always shown in figure 7, when current passes simultaneously in all the tracks on the right and on the left of the sensor (along the direction X), the sensor to test 200 feels the effects of a resultant **B1** that is the sum of the contributions of all the tracks on its right and on its left.

Obviously, the quota, that is the altitude of positioning of the sensor, influences only the intensity of the magnetic field obtained, in the sense that the higher the altitude of positioning of the sensor with respect to the base 3 will be, the lower the value of B2 and B3 will be and therefore the resultant B1. When the quota varies it is therefore necessary to increase the intensity of current if a pre-determined value of B1 wants to be obtained.

Going on with the description of the invention, figure 8. shows exactly what has been already described but, this time, with reference to the underlying tracks. Also in this case, as exactly for the preceding one, the injection of current in a direction along the paths of the tracks (indicated with the direction X because the table has been rotated of 90° in this view) generate the same effect described above. As said, the positions are placed symmetrically with respect to all the tracks, that is those of the upper and lower layer.

Figure 9 provides some examples of values obtained on the basis of specific distances of arrangement and 5 Amperes of circulating current.

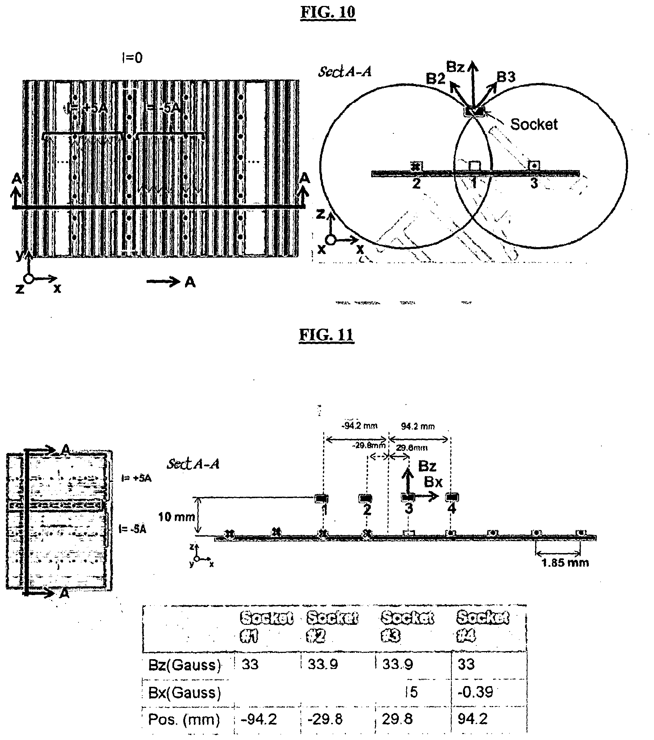

Going on with the description of the invention, figure 10 describes the obtaining of a precise magnetic field (Bz) in the direction Z.

This is now obtained by injecting current in two opposite directions respectively in the track on the right and in the track on the left of the point where the sensor to test is placed, preferably (but not necessarily) in the same layer. Figure 10 therefore shows clearly how, in accordance with this simple methodology, it is possible to obtain precise values of magnetic field also in the direction Z that, notoriously, is the most difficult to control with traditional systems.

Always with reference to figure 10 it is in fact clear how the current circulating in the path 2 generates a magnetic field B2 tangent to the circumference of magnetic field that intercepts the sensor. In the path 3 the current, however, is circulating in the opposite direction and therefore the magnetic field will be B3, always tangent to the circumference, but specular with respect to B2. In this manner, the resultant is perfectly vertical, while the components parallel to the plane 3 are annulled.

Figure 11 shows further values obtained.

It is clear that the preferred embodiment of the invention described is based on the obtaining of components X, Y and Z of magnetic fields, making the same current circular in all the tracks and therefore taking advantage of a symmetric or almost symmetric positioning of each fixing point of the sensor with respect to the tracks in which the current circulates. This in fact creates magnetic fields whose resultant is almost exclusively in a single direction because in the other direction it is annulled.

The value of the circulating current in the tracks will determine the intensity of the resultant magnetic field. A preferred value is of 5 Amperes.

In use, therefore, the sensors are placed on the plane 30, for example in correspondence of the face 3' and current is injected in the tracks 10, generating on them the magnetic field in the direction X of figure 2. Subsequently, leaving unaltered the fixing position of the sensors, current is injected along the tracks X, generating the resultant magnetic field in the direction Y.

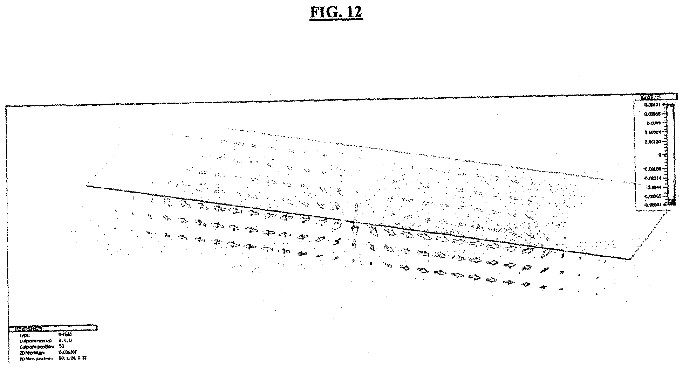

Last, the sensors (one or more than one) are tested in the direction Z by injecting current in a direction on one side and on the opposite direction on the other side as per figure 10, 11 or 12.

In the lower part of the board, therefore on the opposite side with respect to where the sensors to test are placed, reference sensors are positioned, which can be used to guarantee the repeatability and reproducibility of the measures of magnetic field.

The symmetry meant in the present description is to be intended as placement of the tracks with respect to any fixing position not taking into account, obviously, the presence of other fixing positions.

Although in the preferred embodiment of the present invention the injection of current takes place in succession (for example first direction Z, then X and then Y or in a different order of succession), nothing would impede to activate currents simultaneously in such a way as to contextually obtain two directions or even specific directions.

For instance, current could be contextually injected in a single direction on the layer 3' and in two opposite directions with respect to a fixing position in the lower layer. This would allow to obtain magnetic fields either in a direction parallel to the plane 3 or orthogonal to this plane. Therefore, this apparatus gives the possibility, in a precise manner, to obtain any direction and intensity of magnetic field acting on one or more positions 9 in a precise manner.

## Claims

1. An equipment (100) for testing one or more sensors (200) sensitive to a magnetic field through the generation of a magnetic field (**B**) and comprising:
- A base plane (30) comprising one or more fixing positions (9) on which said one or more sensors (200) to be tested can be arranged;
- Means (40) to inject electric current;
- Means (10, 15) for the generation of a magnetic field through the passage of the electric current injected;
- Wherein said means (10, 15) for the generation of the magnetic field comprise:
- Two or more first linear tracks (10), parallel between them, in which the electric current injected can pass and positioned on the base plane (30) along a first direction (X);
- Two or more second linear tracks (15), parallel between them, on which the electric current injected can pass and positioned on the base plane (30) along a second direction (Y), orthogonal to the first direction (X);
- An electronic processor (20) programmed to control the injection of current in the tracks by said electric current means (40) in such a way that the current passes in a single direction and/or in two opposite directions;
- Wherein each of the fixing positions (9) is placed at a point so that the first linear tracks are arranged substantially symmetrically about the first direction (X) on both sides of said point and/or so that the second linear tracks are arranged substantially symmetrically about the second direction (Y) on both sides of said point.

2. Equipment (100), as per claim 1, wherein the injection of current is in a single direction in each of the first tracks and in a single direction in each of the second tracks, in such a way that said symmetry of the tracks with respect to the fixing positions (9) generates at the fixing positions a magnetic field (**B1**) substantially parallel to the base plane (30) and substantially orthogonal to the direction of development of the tracks in which the current passes, and wherein the injection of current is in the same direction in all the tracks that are on one side of one or more fixing positions (9) and the injection of current is in the opposite direction in all the tracks that are on the opposite side of said one or more fixing positions (9) and parallel to the preceding tracks, so that the resultant of the magnetic fields generated by the injected currents at the fixing positions is orthogonal to the base plane (30).

3. Equipment (1), as per claim 1 or 2, wherein the tracks are made of copper.

4. Equipment (1), as per one or more of the preceding claims, wherein the first tracks and the second tracks are on two different faces (3', 3") of the base plane (30).

5. Equipment (1), as per one or more of the preceding claims, wherein around a hundred, preferably two hundred first tracks are included, and around a hundred, preferably two hundred second tracks are included.

6. Equipment (1), as per one or more of the preceding claims, wherein the intensity of the current injected is 5 Amperes.

7. Equipment (1), as per one or more of the preceding claims, wherein the tracks are printed on the base plane.

8. A base plane (30) for test equipment (100) for testing one or more sensors (200) sensitive to a magnetic field through the generation of a magnetic field (**B**), the base plane (30) comprising:
- Means for injecting electric current;
- Means (10, 15) for the generation of a magnetic field through the passage of the electric current injected;
- One or more fixing positions (9) on which said one or more sensors (200) can be arranged to be tested;
- wherein said means (10, 15) for the generation of the magnetic field comprise:
- Two or more first linear tracks (10), parallel between them, in which the electric current injected can pass, and positioned on the base plane (30) along a first direction (X);
- Two or more second linear tracks (15), parallel between them, in which the electric current injected can pass and positioned on the base plane (30) along a second direction (Y), orthogonal to the first direction (X);
- Wherein each of the fixing positions (9) is placed at a point so that the first linear tracks are arranged substantially symmetrically about the first direction (X) on both sides of said point and/or so that the second linear tracks are arranged substantially symmetrically about the second direction (Y) on both sides of said point.

9. A method for testing one or more sensors (200) sensitive to a magnetic field through the generation of a magnetic field (**B**) comprising the operations of:
- Arrangement of one or more sensors (200) to test in relative one or more fixing positions (9) of a base plane (30);
- wherein the base plane comprises at least two or more first linear tracks (10, 15), parallel between them, in which an electric current can pass, and positioned on the base plane (30) along a first direction (X), at least two or more second linear tracks (10, 15), parallel between them, in which an electric current can pass, and positioned on the base plane (30) along a second direction (Y), orthogonal to the first direction (X), each one of the fixing positions (9) being placed at a point so that the first linear tracks are arranged substantially symmetrically about the first direction (X) on both sides of said point and/or so that the second linear tracks are arranged substantially symmetrically about the second direction (Y) on both sides of said point;
- Injection of electric current in the tracks of the base plane (30) and consequent generation of the magnetic field associated with the passage of the injected current;
- and wherein said injection of the current is carried out in succession in a single direction and/or in two opposite directions for the generation of a magnetic field at the position (s) of the one or more sensors to test.

10. A method, as per claim 9, wherein the current is injected in a single direction in each of the first tracks and in a single direction in each of the second tracks, in such a way that said symmetry of the tracks with respect to the fixing positions generate at the fixing positions a magnetic field (**B1**) substantially parallel to the base plane (30) and substantially orthogonal to the direction of development of the tracks in which the current passes, and wherein the injection of current is in the same direction in all the tracks that are on one side of the one or more fixing positions (9) to test and the injection of current is in the opposite direction in all the tracks that are on the opposite side of said one or more fixing positions (9) and parallel to the preceding tracks, so that the resultant of the magnetic fields generated by the injected currents at the fixing positions is orthogonal to the base plane (30).

11. A method, as per claim 9 or 10, wherein the current injected is 5 Amperes.

12. A method, as per one or more of claims from 9 to 11, wherein the current injected is of equal amperage in all tracks.

## Patentansprüche

1. Vorrichtung (100) zum Testen eines oder mehrerer Sensoren (200), die empfindlich gegenüber einem Magnetfeld durch das Erzeugen eines Magnetfeldes (**B**) sind und Folgendes umfassen:
- Eine Basisebene (30), die eine oder mehrere Befestigungspositionen (9) umfasst, an denen der eine oder die mehreren zu testenden Sensoren (200) angeordnet werden können;
- Mittel (40) zum Einspeisen von elektrischem Strom;
- Mittel (10, 15) für die Erzeugung eines Magnetfeldes durch den Durchfluss des eingespeisten elektrischen Stroms;
- Wobei die Mittel (10, 15) für die Erzeugung des Magnetfeldes Folgendes umfassen:
- Zwei oder mehr erste lineare Wege (10), die parallel zueinander verlaufen, in denen der eingespeiste elektrische Strom durchfließen kann und die auf der Basisebene (30) entlang einer ersten Richtung (X) positioniert sind;
- Zwei oder mehr zweite lineare Wege (15), die parallel zueinander verlaufen, auf denen der eingespeiste elektrische Strom durchfließen kann und die auf der Basisebene (30) entlang einer zweiten Richtung (Y) orthogonal zur ersten Richtung (X) positioniert sind;
- Einen elektronischen Prozessor (20), der so programmiert ist, dass er das Einspeisen von Strom in den Wegen durch die Mittel des elektrischen Stroms (40) derart steuert, dass der Strom in einer einzigen Richtung und/oder in zwei entgegengesetzten Richtungen durchfließt;
- Wobei jede der Befestigungspositionen (9) an einem Punkt so angeordnet ist, dass die ersten linearen Wege im Wesentlichen symmetrisch um die erste Richtung (X) auf beiden Seiten des Punktes angeordnet sind und/oder so, dass die zweiten linearen Wege im Wesentlichen symmetrisch um die zweite Richtung (Y) auf beiden Seiten des Punktes angeordnet sind.

2. Vorrichtung (100) nach Anspruch 1, wobei die Einspeisung von Strom in einer einzigen Richtung in jedem der ersten Wege und in einer einzigen Richtung in jedem der zweiten Wege dergestalt erfolgt, dass die Symmetrie der Wege bezüglich der Befestigungspositionen (9) an den Befestigungspositionen ein Magnetfeld (**B1**) erzeugt, das im Wesentlichen parallel zur Basisebene (30) und im Wesentlichen orthogonal zur Richtung der Entwicklung der Wege ist, in denen der Strom durchfließt, und wobei die Einspeisung von Strom in der gleichen Richtung in allen Wegen erfolgt, die sich auf einer Seite einer oder mehrerer Befestigungspositionen (9) befinden, und die Einspeisung von Strom in die entgegengesetzte Richtung in allen Wegen erfolgt, die sich auf der gegenüberliegenden Seite der einen oder mehreren Befestigungspositionen (9) und parallel zu den vorhergehenden Wegen befinden, sodass die Resultierende der von den eingespeisten Strömen an den Befestigungspositionen erzeugten Magnetfelder orthogonal zur Basisebene (30) ist.

3. Vorrichtung (1) nach Anspruch 1 oder 2, wobei die Wege aus Kupfer bestehen.

4. Vorrichtung (1) nach einem oder mehreren der vorhergehenden Ansprüche, wobei sich die ersten Wege und die zweiten Wege auf zwei verschiedenen Seiten (3', 3") der Basisebene (30) befinden.

5. Vorrichtung (1) nach einem oder mehreren der vorhergehenden Ansprüche, wobei etwa hundert, vorzugsweise zweihundert erste Wege enthalten sind, und etwa hundert, vorzugsweise zweihundert zweite Wege enthalten sind.

6. Vorrichtung (1) nach einem oder mehreren der vorhergehenden Ansprüche, wobei die Stärke des eingespeisten Stroms 5 Ampere beträgt.

7. Vorrichtung (1) nach einem oder mehreren der vorhergehenden Ansprüche, wobei die Wege auf die Basisebene gedruckt sind.

8. Basisebene (30) für Vorrichtung (100) zum Testen eines oder mehrerer Sensoren (200), die empfindlich gegenüber einem Magnetfeld durch das Erzeugen eines Magnetfeldes (**B**) sind, wobei die Basisebene (30) Folgendes umfasst:
- Mittel zum Einspeisen von elektrischem Strom;
- Mittel (10, 15) für die Erzeugung eines Magnetfeldes durch den Durchfluss des eingespeisten elektrischen Stroms;
- Eine oder mehrere Befestigungspositionen (9), an denen der eine oder die mehreren Sensoren (200) angeordnet werden können, um getestet zu werden;
- Wobei die Mittel (10, 15) für die Erzeugung des Magnetfeldes Folgendes umfassen:
- Zwei oder mehrere erste lineare Wege (10), die parallel zueinander verlaufen, in denen der eingespeiste elektrische Strom durchfließen kann und die auf der Basisebene (30) entlang einer ersten Richtung (X) positioniert sind;
- Zwei oder mehrere zweite lineare Wege (15), die parallel zueinander verlaufen, in denen der eingespeiste elektrische Strom durchfließen kann und die auf der Basisebene (30) entlang einer zweiten Richtung (Y) orthogonal zur ersten Richtung (X) positioniert sind;
- Wobei jede der Befestigungspositionen (9) an einem Punkt so angeordnet ist, dass die ersten linearen Wege im Wesentlichen symmetrisch um die erste Richtung (X) auf beiden Seiten des Punktes angeordnet sind und/oder so, dass die zweiten linearen Wege im Wesentlichen symmetrisch um die zweite Richtung (Y) auf beiden Seiten des Punktes angeordnet sind.

9. Verfahren zum Testen eines oder mehrerer Sensoren (200), die empfindlich gegenüber einem Magnetfeld durch das Erzeugen eines Magnetfeldes (**B**) sind, umfassend die folgenden Vorgänge:
- Anordnung eines oder mehrerer zu testender Sensoren (200) in einer oder mehreren Befestigungspositionen (9) einer Basisebene (30);
- Wobei die Basisebene mindestens zwei oder mehrere erste lineare Wege (10, 15) umfasst, die parallel zueinander verlaufen, in denen ein eingespeister elektrischer Strom durchfließen kann und die auf der Basisebene (30) entlang einer ersten Richtung (X) positioniert sind, mindestens zwei oder mehrere zweite lineare Wege (10, 15), die parallel zueinander verlaufen, in denen ein eingespeister elektrischer Strom durchfließen kann und die auf der Basisebene (30) entlang einer zweiten Richtung (Y) orthogonal zur ersten Richtung (X) positioniert sind, wobei jede der Befestigungspositionen (9) an einem Punkt so angeordnet ist, dass die ersten linearen Wege im Wesentlichen symmetrisch um die erste Richtung (X) auf beiden Seiten des Punktes angeordnet sind und/oder so, dass die zweiten linearen Wege im Wesentlichen symmetrisch um die zweite Richtung (Y) auf beiden Seiten des Punktes angeordnet sind;
- Einspeisung von elektrischem Strom in die Wege der Basisebene (30) und nachfolgende Erzeugung des dem Durchfluss des eingespeisten Stroms zugeordneten Magnetfeldes;
- und wobei das Einspeisen des Stroms nacheinander in einer einzigen Richtung und/oder in zwei entgegengesetzten Richtungen für die Erzeugung eines Magnetfeldes an der bzw. den Position(en) des einen oder der mehreren zu testenden Sensoren ausgeführt wird.

10. Verfahren nach Anspruch 9, wobei der Strom in einer einzigen Richtung in jedem der ersten Wege und in einer einzigen Richtung in jedem der zweiten Wege dergestalt eingespeist wird, dass die Symmetrie der Wege bezüglich der Befestigungspositionen an den Befestigungspositionen ein Magnetfeld (**B1**) erzeugt, das im Wesentlichen parallel zur Basisebene (30) und im Wesentlichen orthogonal zur Richtung der Entwicklung der Wege ist, in denen der Strom fließt, und wobei die Einspeisung von Strom in der gleichen Richtung in allen Wegen erfolgt, die sich auf einer Seite einer oder mehrerer zu testenden Befestigungspositionen (9) befinden, und die Einspeisung von Strom in die entgegengesetzte Richtung in allen Wegen erfolgt, die sich auf der gegenüberliegenden Seite der einen oder mehreren Befestigungspositionen (9) und parallel zu den vorhergehenden Wegen befinden, sodass die Resultierende der von den eingespeisten Strömen an den Bef estigungspositionen erzeugten Magnetfelder orthogonal zur Basisebene (30) ist.

11. Verfahren nach Anspruch 9 oder 10, wobei der eingespeiste Strom 5 Ampere beträgt.

12. Verfahren nach einem oder mehreren der Ansprüche 9 bis 11, wobei der eingespeiste Strom in allen Wegen die gleiche Amperezahl aufweist.

## Revendications

1. Équipement (100) destiné à tester un ou plusieurs capteurs (200) sensibles à un champ magnétique via la génération d'un champ magnétique (**B**) et comprenant:
- Un plan de base (30) comprenant une ou plusieurs positions de fixation (9) sur lesquelles lesdits un ou plusieurs capteurs (200) à tester peuvent être disposés;
- Des moyens (40) pour injecter un courant électrique;
- Des moyens (10, 15) pour la génération d'un champ magnétique via le passage du courant électrique injecté;
- Dans lequel lesdits moyens (10, 15) pour la génération du champ magnétique comprennent:
- Deux ou plus de deux premières pistes linéaires (10), parallèles les unes aux autres, dans lesquelles le courant électrique injecté peut passer et positionnées sur le plan de base (30) le long d'une première direction (X);
- Deux ou plus de deux secondes pistes linéaires (15), parallèles les unes aux autres, sur lesquelles le courant électrique injecté peut passer et positionnées sur le plan de base (30) le long d'une seconde direction (Y), orthogonale par rapport à la première direction (X);
- Un processeur électronique (20) programmé pour commander l'injection du courant dans les pistes par lesdits moyens de courant électrique (40) de telle sorte que le courant passe dans une seule single direction et/ou dans deux directions opposées;
dans lequel chacune des positions de fixation (9) est placée au niveau d'un point de sorte que les premières pistes linéaires soient disposées de façon sensiblement symétrique autour de la première direction (X) des deux côtés dudit point et/ou de sorte que les secondes pistes linéaires soient disposées de façon sensiblement symétrique autour de la seconde direction (Y) des deux côtés dudit point.

2. Équipement (100), selon la revendication 1, dans lequel l'injection du courant se fait dans une seule direction dans chacune des premières pistes et dans une seule direction dans chacune des secondes pistes, de sorte que ladite symétrie des pistes par rapport aux positions de fixation (9) génère, au niveau des positions de fixation, un champ magnétique (**B1**) sensiblement parallèle au plan de base (30) et sensiblement orthogonal par rapport à la direction de développement des pistes dans lesquelles le courant passe, et dans lequel l'injection du courant se fait dans la même direction dans toutes les pistes qui sont d'un côté d'une ou plusieurs positions de fixation (9) et l'injection du courant se fait dans la direction opposée dans toutes les pistes qui sont du côté opposé desdites une ou plusieurs positions de fixation (9) et dans une direction parallèle aux pistes précédentes, de sorte que les champs magnétiques qui en résultent, générés par les courants injectés aux positions de fixation, soient orthogonaux au plan de base (30).

3. Équipement (1), selon la revendication 1 ou 2, dans lequel les pistes sont en cuivre.

4. Équipement (1), selon une ou plusieurs des revendications précédentes, dans lequel les premières pistes et les secondes pistes sont sur des faces différentes (3', 3") du plan de base (30).

5. Équipement (1), selon une ou plusieurs des revendications précédentes, dans lequel environ une centaine, de préférence deux-cents premières pistes sont prévues, et environ une centaine, de préférence deux-cents secondes pistes sont prévues.

6. Équipement (1), selon une ou plusieurs des revendications précédentes, dans lequel l'intensité du courant injecté est de 5 Ampères.

7. Équipement (1), selon une ou plusieurs des revendications précédentes, dans lequel les pistes sont imprimées sur le plan de base.

8. Plan de base (30) pour un équipement de test (100) destiné à tester un ou plusieurs capteurs (200) sensibles à un champ magnétique via la génération d'un champ magnétique (**B**), le plan de base (30) comprenant:
- Des moyens d'injection de courant électrique;
- Des moyens (10, 15) de génération d'un champ magnétique via le passage du courant électrique injecté;
- Une ou plusieurs positions de fixation (9) sur lesquelles lesdits un ou plusieurs capteurs (200) peuvent être disposés pour être testés ;
- Dans lequel lesdits moyens (10, 15) for the génération of the champ magnétique comprise:
- Deux ou plus de deux premières pistes linéaires (10), parallèles les unes aux autres, dans lesquelles le courant électrique injecté peut passer, et positionnées sur le plan de base (30) le long d'une première direction (X);
- Deux ou plus de deux secondes pistes linéaires (15), parallèles les unes aux autres, dans lesquelles le courant électrique injecté peut passer, et positionnées sur le plan de base (30) le long d'une seconde direction (Y), orthogonale par rapport à la première direction (X);
- Dans lequel chacune des positions de fixation (9) est placée au niveau d'un point de telle sorte que les premières pistes linéaires soient disposées de façon sensiblement symétrique autour de la première direction (X) des deux côtés dudit point et/ou de sorte que les secondes pistes linéaires soient disposées de façon sensiblement symétrique autour de la seconde direction (Y) des deux côtés dudit point.

9. Procédé destiné à tester un ou plusieurs capteurs (200) sensibles à un champ magnétique via la génération d'un champ magnétique (**B**) comprenant les opérations consistant à:
- Disposer un ou plusieurs capteurs (200) à tester à une ou plusieurs positions de fixation (9) relatives d'un plan de base (30);
- Dans lequel le plan de base comprend au moins deux ou plus de deux premières pistes linéaires (10, 15), parallèles les unes aux autres, dans lesquelles un courant électrique peur passer, et positionnées sur le plan de base (30) le long d'une première direction (X), au moins deux ou plus de deux secondes pistes linéaires (10, 15), parallèles les unes aux autres, dans lesquelles un courant électrique peur passer, et positionnées sur le plan de base (30) le long d'une seconde direction (Y), orthogonale par rapport à la première direction (X), chacune des positions de fixation (9) étant placée au niveau d'un point de telle sorte que les premières pistes linéaires soient disposées de façon sensiblement symétrique autour de la première direction (X) des deux côtés dudit point et/ou de sorte que les secondes pistes linéaires soient disposées de façon sensiblement symétrique autour de la seconde direction (Y) des deux côtés dudit point;
- Injecter du courant électrique dans les pistes du plan de base (30) et par la suite, générer le champ magnétique associé au passage du courant injecté;
- et dans lequel la dite injection du courant se fait successivement dans une seule direction et/ou dans deux directions opposées pour la génération d'un champ magnétique à la/aux position(s) d'un ou plusieurs des capteurs à tester.

10. Procédé, selon la revendication 9, dans lequel le courant est injecté dans une seule direction dans chacune des premières pistes et dans une seule direction dans chacune des secondes pistes de sorte que ladite symétrie des pistes par rapport aux positions de fixation génère, aux positions de fixation, un champ magnétique (**B1**) sensiblement parallèle au plan de base (30) et sensiblement orthogonal par rapport à la direction de développement des pistes dans lesquelles le courant passe, et dans lequel l'injection du courant se fait dans la même direction dans toutes les pistes qui sont d'un côté d'une ou plusieurs des positions de fixation (9) à tester et l'injection du courant se fait dans la direction opposée dans toutes les pistes qui sont du côté opposé desdites une ou plusieurs positions de fixation (9) et dans la direction parallèle aux pistes précédentes, de sorte que les champs magnétiques qui en résultent, générés par les courants injectés aux positions de fixation sont orthogonaux au plan de base (30).

11. Procédé, selon la revendication 9 ou 10, dans lequel le courant injecté est de 5 Ampères.

12. Procédé, selon une ou plusieurs des revendications 9 à 11, dans lequel le courant injecté est du même ampérage dans toutes le pistes.
